# EUROPEAN PATENT SPECIFICATION

(11) **EP 3 767 092 B1**
(45) Date of publication and mention of the grant of the patent: **28.12.2022**
(21) Application number: 20185801.6
(22) Date of filing: 14.07.2020
(51) Int. Cl.: F02C 9/18, F02K 5/00, F02C 9/52, F02C 3/13

(54) **MODULATED COMBUSTOR BYPASS FOR HYBRID IDLE**
MODULIERTER BRENNKAMMER-BYPASS FÜR HYBRIDLEERLAUF
DÉRIVATION MODULÉE DE CHAMBRE DE COMBUSTION POUR RALENTI HYBRIDE

(30) Priority: 15.07.2019 US 201916511284
(43) Date of publication of application: 20.01.2021
(73) Proprietor: Raytheon Technologies Corporation, Farmington, CT 06032 (US)
(72) Inventor: TERWILLIGER, Neil, Meriden, CT 06450 (US); PASCU, Victor, Jupiter, FL 33458 (US)
(74) Representative: Dehns

(56) References cited:
- EP-A1- 3 282 110
- EP-A1- 3 415 436
- US-A1- 2018 003 072

## Description

### BACKGROUND

The subject matter disclosed herein generally relates to rotating machinery and, more particularly, to a method and an apparatus for modulated combustor bypass air flow for idle operation control in a hybrid propulsion system.

A hybrid propulsion system for an aircraft can include a gas turbine engine and at least one motor that supplements performance of the gas turbine engine. Gas turbine engines and motors typically have separate control laws to manage gas turbine power and electric power. Separate control laws can increase challenges in effectively managing events, such as rapid transients, thermal-mechanical stress, component lifespan, and/or other control goals. Even an engine idle condition supplemented by a motor in a hybrid propulsion system can impact efficiency of fuel consumption in a gas turbine engine. For example, adding power to a spool of a gas turbine engine using a motor can be limited by lean blow-out of the combustor of the gas turbine engine as fuel-air ratio is driven down by the motor.

US 2018/003072 discloses a hybrid gas turbine engine and a method and apparatus for operating the system during descent. EP 3 282 110 discloses a method for managing electrical loads applied to an electrical generator powered by an engine. EP 3 415 436 discloses a method and system for starting a turbomachine within a hybrid-electric aircraft propulsion system.

### BRIEF DESCRIPTION

According to claim 1, a hybrid propulsion system includes a gas turbine engine having a low speed spool, a high speed spool, and a combustor. The low speed spool can include a low pressure compressor in a compressor section and a low pressure turbine in a turbine section, and the high speed spool can include a high pressure compressor in the compressor section and a high pressure turbine in the turbine section. The hybrid propulsion system also includes a motor configured to augment rotational power of the high speed spool, a flow modulation device configured to control a combustor bypass air flow around the combustor to the turbine section, and a controller. The controller is operable to determine a mode of operation of the gas turbine engine, apply supplemental power to the high speed spool using the motor, modulate the combustor bypass air flow using the flow modulation device based on determining that the gas turbine engine is in an idle mode of operation and supplemental power is applied to the high speed spool, and adjust a fuel-air ratio at the combustor based on modulation of the combustor bypass air flow and the supplemental power applied to the high speed spool.

Further embodiments may include where the flow modulation device is configured to receive the combustor bypass air flow from the compressor section.

Further embodiments may include where the flow modulation device is configured to receive the combustor bypass air flow from between the low pressure compressor and the high pressure compressor.

Further embodiments may include where the flow modulation device is configured to receive the combustor bypass air flow from a bleed location between the compressor section and the combustor.

Further embodiments may include where the combustor bypass air flow includes air compressed by a compression source external to the gas turbine engine.

Further embodiments may include where the combustor bypass air flow is output to the high pressure turbine.

Further embodiments may include a generator driven by the low speed spool, where the generator is configured to provide power to the motor.

Further embodiments may include where the controller is configured to determine which available source of energy to draw from to provide supplemental power and power the motor by one or more of: a generator, an energy storage system, and a power source external to the gas turbine engine.

Further embodiments may include where the controller is further configured to modulate the flow modulation device based on a cross-sectional area or a pressure ratio.

Further embodiments may include where the controller is further configured to modulate the combustor bypass air flow as an engine cooling flow using the flow modulation device based on determining that the gas turbine engine is in a high engine power mode of operation above the idle mode of operation.

According to claim 9, a method for controlling a hybrid propulsion system includes determining, by a controller, a mode of operation of a gas turbine engine having a low speed spool and a high speed spool. Supplemental power is applied to the high speed spool. The controller modulates a combustor bypass air flow around a combustor to a turbine section of the gas turbine engine using a flow modulation device based on determining that the gas turbine engine is in an idle mode of operation and supplemental power is applied to the high speed spool. The controller adjusts a fuel-air ratio at the combustor based on modulation of the combustor bypass air flow and the supplemental power applied to the high speed spool.

Further embodiments may include driving a generator by the low speed spool and providing power produced by the generator to the motor.

Further embodiments may include determining which available source of energy to draw from to provide supplemental power and powering the motor by one or more of: a generator, an energy storage system, and a power source external to the gas turbine engine.

Further embodiments may include modulating the flow modulation device based on a cross-sectional area or a pressure ratio.

Further embodiments may include modulating the combustor bypass air flow as an engine cooling flow using the flow modulation device based on determining that the gas turbine engine is in a high engine power mode of operation above the idle mode of operation.

Further embodiments may include reducing a fuel flow to the combustor while modulating the combustor bypass air flow and applying supplemental power to the high speed spool to maintain a fuel-air ratio.

A technical effect of the apparatus, systems and methods is achieved by providing modulated combustor bypass air flow for idle operation control in a hybrid propulsion system.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of a gas turbine engine, in accordance with an embodiment of the disclosure;
FIG. 2 is a schematic diagram of a hybrid electric propulsion system with physical power flow connections (electrical and mechanical power), in accordance with an embodiment of the disclosure;
FIG. 3 is a schematic diagram of control signal paths of a hybrid electric propulsion system, in accordance with an embodiment of the disclosure;
FIG. 4 is a plot that graphically illustrates a relationship between thrust and power transfer in a gas turbine engine with a hybrid electric propulsion system, in accordance with an embodiment of the disclosure;
FIG. 5 is a plot that graphically illustrates a relationship between fuel-air ratio and power transfer in a gas turbine engine with a hybrid electric propulsion system, in accordance with an embodiment of the disclosure; and
FIG. 6 is a flow chart illustrating a method, in accordance with an embodiment of the disclosure.

### DETAILED DESCRIPTION

A detailed description of one or more embodiments of the disclosed apparatus and method are presented herein by way of exemplification and not limitation with reference to the Figures.

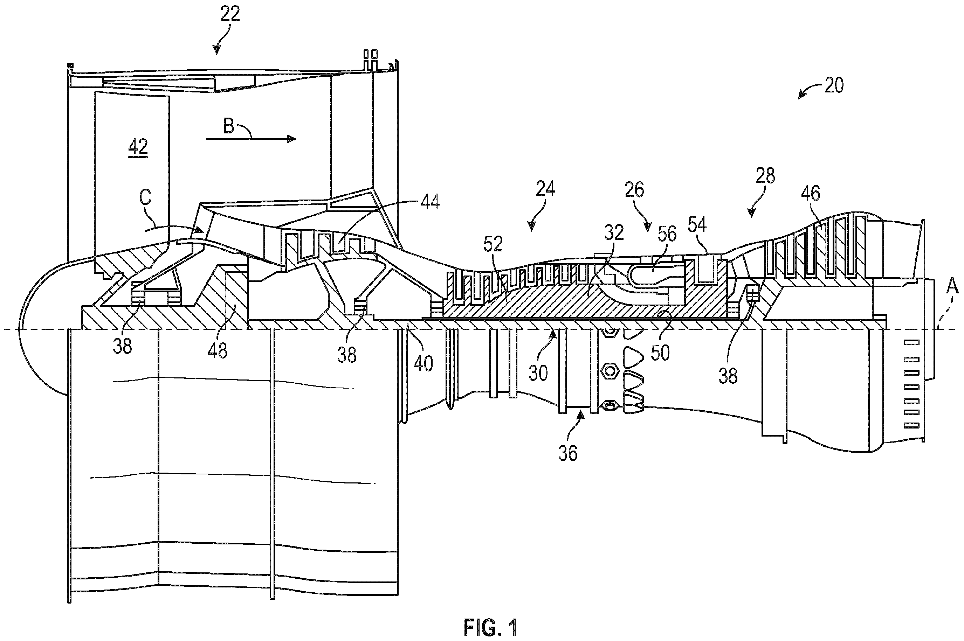

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclical gear train, such as a planetary gear system or other gear system, with a gear reduction ratio of greater than about 2.3 and the low pressure turbine 46 has a pressure ratio that is greater than about five (5). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclical gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5} (where °R = K x 9/5). The "Low corrected fan tip speed" as disclosed herein according to one non-limiting embodiment is less than about 1150 ft/second (350.5 m/sec).

While the example of FIG. 1 illustrates one example of the gas turbine engine 20, it will be understood that any number of spools, inclusion or omission of the gear system 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position or mobile system, and other such applications.

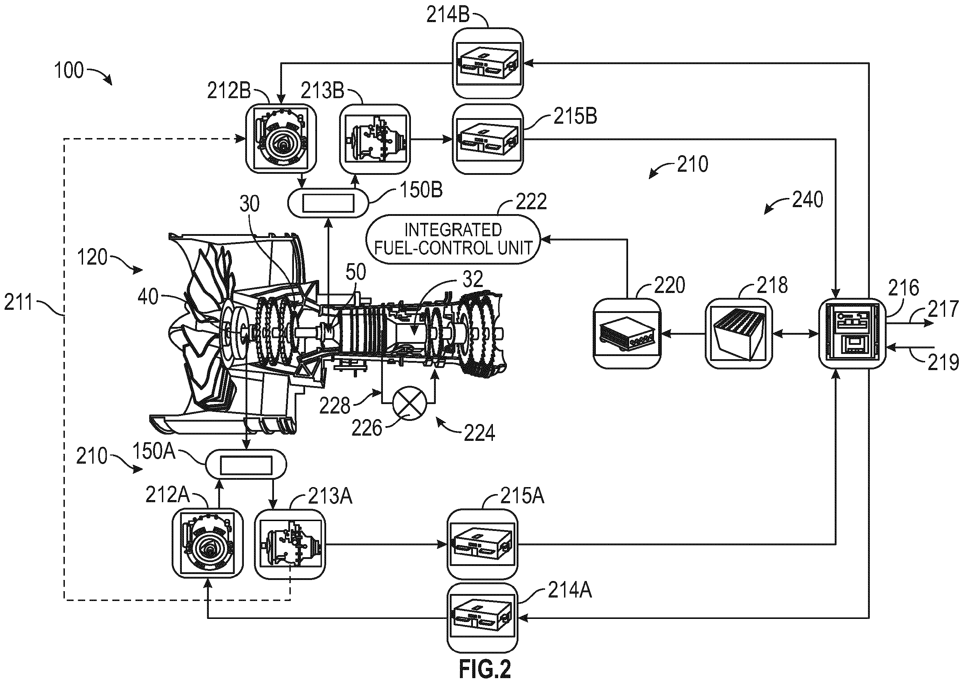

FIG. 2 illustrates a hybrid electric propulsion system 100 (also referred to as hybrid gas turbine engine 100 or hybrid propulsion system 100) including a gas turbine engine 120 operably coupled to an electrical power system 210 as part of a hybrid electric aircraft. One or more mechanical power transmissions 150 (e.g., 150A, 150B) can be operably coupled between the gas turbine engine 120 and the electrical power system 210. The gas turbine engine 120 can be an embodiment of the gas turbine engine 20 of FIG. 1 and includes one or more spools, such as low speed spool 30 and high speed spool 32, each with at least one compressor section and at least one turbine section operably coupled to a shaft (e.g., low pressure compressor 44 and low pressure turbine 46 coupled to inner shaft 40 and high pressure compressor 52 and high pressure turbine 54 coupled to outer shaft 50 as depicted in FIG. 1). The electrical power system 210 can include a first electric motor 212A configured to augment rotational power of the low speed spool 30 and a second electric motor 212B configured to augment rotational power of the high speed spool 32. Although two electric motors 212A, 212B are depicted in FIG. 2, it will be understood that there may be only a single electric motor (e.g., only electric motor 212B) or additional electric motors (not depicted). Further, the electric motors 212A, 212B are generally referred to as motors 212A, 212B, as alternate power sources may be used, such as hydraulic motors, pneumatic motors, and other such types of motors known in the art. The electrical power system 210 can also include a first electric generator 213A configured to convert rotational power of the low speed spool 30 to electric power and a second electric generator 213B configured to convert rotational power of the high speed spool 32 to electric power. Although two electric generators 213A, 213B (generally referred to as generators 213A, 213B) are depicted in FIG. 2, it will be understood that there may be only a single electric generator (e.g., only electric generator 213A) or additional electric generators (not depicted). In some embodiments, one or more of the electric motors 212A, 212B can be configured as a motor or a generator depending upon an operational mode or system configuration, and thus one or more of the electric generators 213A, 213B may be omitted.

In the example of FIG. 2, the mechanical power transmission 150A includes a gearbox operably coupled between the inner shaft 40 and a combination of the first electric motor 212A and first electric generator 213A. The mechanical power transmission 150B can include a gearbox operably coupled between the outer shaft 50 and a combination of the second electric motor 212B and second electric generator 213B. In embodiments where the electric motors 212A, 212B are configurable between a motor and generator mode of operation, the mechanical power transmission 150A, 150B can include a clutch or other interfacing element(s).

The electrical power system 210 can also include motor drive electronics 214A, 214B operable to condition current to the electric motors 212A, 212B (e.g., DC-to-AC converters). The electrical power system 210 can also include rectifier electronics 215A, 215B operable to condition current from the electric generators 213A, 213B (e.g., AC-to-DC converters). The motor drive electronics 214A, 214B and rectifier electronics 215A, 215B can interface with an energy storage management system 216 that further interfaces with an energy storage system 218. The energy storage management system 216 can be a bi-directional DC-DC converter that regulates voltages between energy storage system 218 and electronics 214A, 214B, 215A, 215B. The energy storage system 218 can include one or more energy storage devices, such as a battery, a super capacitor, an ultra capacitor, and the like. The energy storage management system 216 can facilitate various power transfers within the hybrid electric propulsion system 100. For example, power from the first electric generator 213A can be transferred 211 to the second electric motor 212B as a low speed spool 30 to high speed spool 32 power transfer. Other examples of power transfers may include a power transfer from the second electric generator 213B to the first electric motor 212A as a high speed spool 32 to low speed spool 30 power transfer. The energy storage management system 216 may also transfer power to one or more electric motors on the engine, or to external loads 217 and receive power from one or more external power sources 219 (e.g., aircraft power, auxiliary power unit power, cross-engine power, and the like).

A power conditioning unit 220 and/or other components can be powered by the energy storage system 218. The power conditioning unit 220 can distribute electric power to support actuation and other functions of the gas turbine engine 120. For example, the power conditioning unit 220 can power an integrated fuel control unit 222 to control fuel flow to the gas turbine engine 120. The power conditioning unit 220 can also power a plurality of actuators (not depicted), such as bleed actuators, vane actuators, and the like. A combustor bypass 224 can include a flow modulation device 226 that is configured to control a combustor bypass air flow around the combustor 56 (FIG. 1) to the turbine section 28 (FIG. 1). The flow modulation device 226 can include one or more valves or other such devices operable to modulate an air flow from a source location 228 at the pressures and temperatures around the combustor 56. The source location 228 can be a bleed location at or proximate to the compressor section 24 (FIG. 1). For example, the source location 228 can be between the low pressure compressor 44 and the high pressure compressor 52, between the compressor section 24 and the combustor 56 (e.g., at a diffuser section), at the high pressure compressor 52, and other such locations (including a compression source external to the gas turbine engine 120). Collectively, any effectors that can change a state of the gas turbine engine 120 and/or the electrical power system 210 may be referred to as hybrid electric system control effectors 240. Examples of the hybrid electric system control effectors 240 can include the electric motors 212A, 212B, electric generators 213A, 213B, integrated fuel control unit 222, flow modulation device 226 and/or other elements (not depicted).

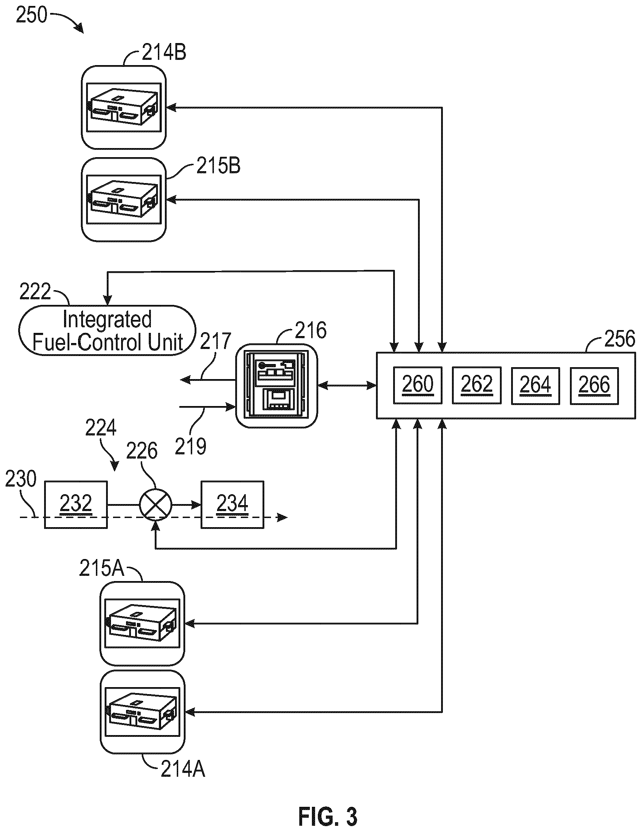

FIG. 3 is a schematic diagram of control signal paths 250 of the hybrid electric propulsion system 100 of FIG. 2 and is described with continued reference to FIGS. 1 and 2. A controller 256 can interface with the motor drive electronics 214A, 214B, rectifier electronics 215A, 215B, energy storage management system 216, integrated fuel control unit 222, combustor bypass 224, and/or other components (not depicted) of the hybrid electric propulsion system 100. In embodiments, the controller 256 can control and monitor for fault conditions of the gas turbine engine 120 and/or the electrical power system 210. For example, the controller 256 can be integrally formed or otherwise in communication with a full authority digital engine control (FADEC) of the gas turbine engine 120. In embodiments, the controller 256 can include a processing system 260, a memory system 262, and an input/output interface 264. The controller 256 can also include various operational controls, such as a combustor bypass control 266 that controls the flow modulation device 226 and/or other hybrid electric system control effectors 240 further described herein.

The processing system 260 can include any type or combination of central processing unit (CPU), including one or more of: a microprocessor, a digital signal processor (DSP), a microcontroller, an application specific integrated circuit (ASIC), a field programmable gate array (FPGA), or the like. The memory system 262 can store data and instructions that are executed by the processing system 260. In embodiments, the memory system 262 may include random access memory (RAM), read only memory (ROM), or other electronic, optical, magnetic, or any other computer readable medium onto which is stored data and algorithms in a non-transitory form. The input/output interface 264 is configured to collect sensor data from the one or more system sensors and interface with various components and subsystems, such as components of the motor drive electronics 214A, 214B, rectifier electronics 215A, 215B, energy storage management system 216, integrated fuel control unit 222, combustor bypass 224, and/or other components (not depicted) of the hybrid electric propulsion system 100. The controller 256 provides a means for controlling the hybrid electric system control effectors 240 using a combustor bypass control 266 that is dynamically updated during operation of the hybrid electric propulsion system 100. The means for controlling the hybrid electric system control effectors 240 can be otherwise subdivided, distributed, or combined with other control elements.

The controller 256 with combustor bypass control 266 can apply control laws and access/update models to determine how to control and transfer power to and from the hybrid electric system control effectors 240. For example, sensed and/or derived parameters related to speed, flow rate, pressure ratios, temperature, thrust, and the like can be used to establish operational schedules and transition limits to maintain efficient operation of the gas turbine engine 120. For instance, a mode of operation of the gas turbine engine 120, such as idle, takeoff, climb, cruise, and descent can have different power settings, thrust requirements, flow requirements, and temperature effects. The combustor bypass control 266 can control the flow modulation device 226 to control a combustor bypass air flow 230 between a compression source 232 and an output 234. The compression source 232 can be internal to the gas turbine engine 120 (e.g., where source location 228 is proximate to compressor section 24) or external (e.g., a compressed air flow of an auxiliary power unit or other compressor). As the controller 256 adds rotational power to the high speed spool 32 using a motor, such as the second electric motor 212B, a fuel-air ratio at the combustor 56 can change. As fuel-air ratio is reduced during idle with power added to the high speed spool 32 by an electric motor 212B, a limiting factor can be lean blow-out of the combustor 56, where fuel can no longer be combusted. As the combustor bypass control 266 modulates (opens and closes) the flow modulation device 226, the combustor bypass air flow 230 can adjust the fuel-air ratio at the combustor 56. At low engine power levels, such as idle, the flow modulation device 226 can be controlled to increase the combustor bypass air flow 230 in order to decrease the flow going through the combustor 56 in order to raise fuel air ratio and prevent lean blow-out of the combustor 56. If the bypass bleed is also configured to cool the turbine, it may also be modulated up when increased cooling is required, such as at a high engine power mode of operation (e.g., takeoff and climb). Thus, the combustor bypass 224 can have multiple uses that shift depending upon the mode of operation of the gas turbine engine 120 and whether power is being added to the high speed spool 32 by a motor, such as the second electric motor 212B.

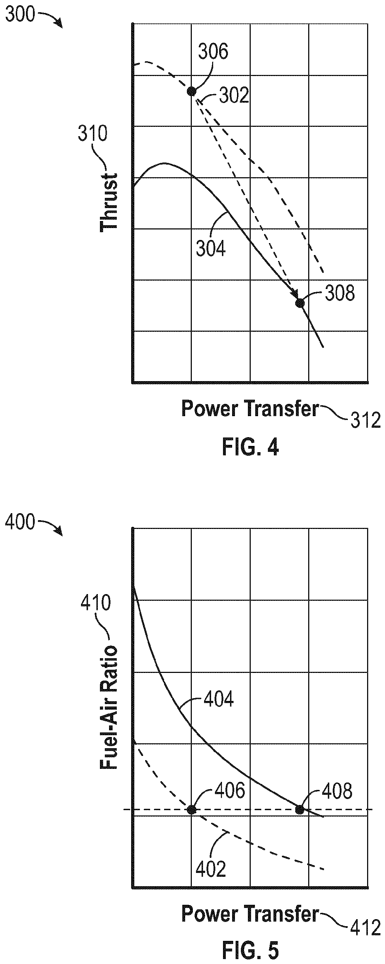

Referring now to FIG. 4, plot 300 graphically illustrates a relationship between thrust 310 and power transfer 312 in a gas turbine engine, such as the gas turbine engine 120 of FIG. 2. In this example, the power transfer is from the low spool generator (e.g., first electric generator 213A) to the high spool motor (e.g., second electric motor 212B). Line 302 illustrates an example relationship between thrust 310 and power transfer 312 when the second electric motor 212B is used to transfer power to the high speed spool 32 with the flow modulation device 226 closed such that the combustor bypass air flow 230 does not flow through the combustor bypass 224. Line 304 illustrates an example relationship between thrust 310 and power transfer 312 when the second electric motor 212B is used to transfer power to the high speed spool 32 with the flow modulation device 226 modulated such that the combustor bypass air flow 230 can flow through the combustor bypass 224. Thus, for a given minimum fuel-air ratio, the gas turbine engine 120 can idle with a lower thrust level when the flow modulation device 226 is modulated while power is drawn from the low speed spool 30 and added to the high speed spool 32. Point 306 on line 302 and point 308 on line 304 represent minimum fuel-air ratio points, where a minimum fuel-air ratio can shift based on the thrust 310 with respect to power transfer 312.

Referring now to FIG. 5, plot 400 graphically illustrates a relationship between fuel-air ratio 410 and power transfer 412 in a gas turbine engine, such as the gas turbine engine 120 of FIG. 2. Line 402 illustrates an example relationship between fuel-air ratio 410 and power transfer 412 when the second electric motor 212B is used to transfer power to the high speed spool 32 with the flow modulation device 226 closed such that the combustor bypass air flow 230 does not flow through the combustor bypass 224. Line 404 illustrates an example relationship between fuel-air ratio 410 and power transfer 412 when the second electric motor 212B is used to transfer power to the high speed spool 32 with the flow modulation device 226 modulated such that the combustor bypass air flow 230 can flow through the combustor bypass 224. Thus, the gas turbine engine 120 can idle with a higher fuel-air ratio when the flow modulation device 226 is modulated while power is added to the high speed spool 32. Alternatively, the gas turbine engine 120 can idle with lower thrust or fuel flow at the same fuel air ratio. Point 406 on line 402 and point 408 on line 404 represent minimum fuel-air ratio points, where a minimum value of fuel-air ratio 410 can remain substantially constant at different levels of power transfer 412. It should be understood that while FIGS. 4 and 5 show an example of drawing power from the low speed spool 30 and adding that power to the high speed spool 32, the thrust reduction is generally caused by the selection of drawing power from the low speed spool 30 while the need for the bypass bleed is generally caused by adding power to the high speed spool 32, whatever the source. Other sources of energy may be chosen based on the specific needs of an application.

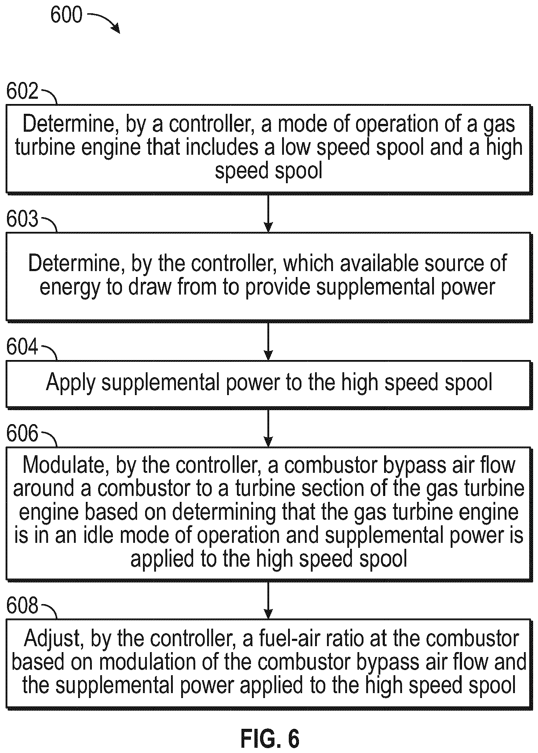

Referring now to FIG. 6 with continued reference to FIGS. 1-5, FIG. 6 is a flow chart illustrating a method 600 for providing modulated combustor bypass air flow for idle operation control in a hybrid propulsion system, in accordance with an embodiment. The method 600 may be performed, for example, by the hybrid electric propulsion system 100 of FIG. 2. For purposes of explanation, the method 600 is described primarily with respect to the hybrid electric propulsion system 100 of FIG. 2; however, it will be understood that the method 600 can be performed on other configurations (not depicted).

Method 600 pertains to the controller 256 executing embedded code for the combustor bypass control 266 to modulate combustor bypass air flow for idle operation control in a hybrid propulsion system. At block 602, the controller 256 can determine a mode of operation of a gas turbine engine 120 that includes a low speed spool 30 and a high speed spool 32. The mode of operation can be determined based on a thrust command, operating parameters, sensed values, and/or other factors known in the art. At block 603, the controller 256 can determine which available source of energy to draw from to provide supplemental power. For example, an available source of energy can be power from the first electric generator 213A, the energy storage system 218, one or more external power sources 219, or the like. Using the first electric generator 213A can have an effect on operating performance of the gas turbine engine 120. Stored energy availability or scheduled/reserved use may limit when energy is available from the energy storage system 218. Availability of one or more external power sources 219 may be constrained by activity associated with other electrical loads or other factors.

At block 604, the controller 256 can apply supplemental power to the high speed spool 32, for instance, using the second electric motor 212B. The flow modulation device 226 can be configured to receive the combustor bypass air flow 230 from a compressor section 24 of the gas turbine engine 120. As an example, the flow modulation device 226 can be configured to receive the combustor bypass air flow 230 from between the low pressure compressor 44 and the high pressure compressor 52. Alternatively, the flow modulation device 226 can be configured to receive the combustor bypass air flow 230 from a bleed location between the compressor section 24 and the combustor 56 of the gas turbine engine 120. As a further alternative, the combustor bypass air flow 230 can be air compressed by a compression source 232 external to the gas turbine engine 120.

At block 606, the controller 256 can modulate a combustor bypass air flow 230 around a combustor 56 to a turbine section 28 of the gas turbine engine 120 using a flow modulation device 226 based on determining that the gas turbine engine 120 is in an idle mode of operation and supplemental power is applied to the high speed spool 32. The combustor bypass air flow 230 can be output 234 to the high pressure turbine 54, for example. The location at or within high pressure turbine 54 at which the combustor bypass air flow 230 enters can be established at design time depending on flow requirements and available space. As an example, bypass flow can enter before or after a first vane stage (e.g., a choke point) of the high pressure turbine 54.

At block 608, the controller 256 can adjust a fuel-air ratio at the combustor 56 based on modulation of the combustor bypass air flow 230 and the supplemental power applied to the high speed spool 32.

In embodiments, a generator, such as the first electric generator 213A, can be driven by the low speed spool 30, where the generator is configured to provide power to the motor, such as the second electric motor 212B. As a further alternative, the motor can be powered by one or more of: a generator, an energy storage system 218, and a power source external to the gas turbine engine 120 (one or more external power sources 219). The generator providing power to the motor can be connected to a different thermal engine than the gas turbine engine 120. The controller 256 can be configured to modulate the flow modulation device 226 based on a cross-sectional area or a pressure ratio, for example. The controller can also be configured to modulate the combustor bypass air flow 230 as an engine cooling flow using the flow modulation device 226 based on determining that the gas turbine engine 120 is in a high engine power mode of operation above the idle mode of operation. The flow modulation device 226 can be modulated using one or more valves based on a level of compression provided by the gas turbine engine 120 and a cooling threshold. For instance, as the level of compression increases, resulting heat can increase the need to use the flow modulation device 226 for cooling. A cooling threshold, such as a temperature-based value can also or alternatively be used to determine when and how the flow modulation device 226 should be modulated for cooling. The controller 256 can also enable reducing a fuel flow to the combustor 56 while modulating the combustor bypass air flow 230 and applying supplemental power to the high speed spool 32 to maintain a fuel-air ratio. Fuel flow control can be managed by the controller 256 through the integrated fuel control unit 222. Thus, a modulated flow that bypasses the combustor 56 can be capable of raising fuel-air ratio at a constant fuel flow or reducing fuel flow at a constant fuel-air ratio, enabling more power transfer to the high speed spool 32 and reducing thrust or fuel flow.

It ordinary skill in the art that, the stability enhancement provided by the dynamic torque and power capability of the coupled electric motor system described herein can be combined with and enhance other surge control features, such as surge control valves, variable stators, and fuel flow control.

The term "about" is intended to include the degree of error associated with measurement of the particular quantity based upon the equipment available at the time of filing the application. It will be understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that the invention is limited within the scope of the claims.

## Claims

1. A hybrid propulsion system (100) comprising:
a gas turbine engine (20) comprising a low speed spool (30), a high speed spool (32), and a combustor (56), wherein the low speed spool comprises a low pressure compressor (44) in a compressor section (24) and a low pressure turbine (46) in a turbine section (28), and the high speed spool comprises a high pressure compressor (52) in the compressor section and a high pressure turbine (54) in the turbine section;
a motor (212B) configured to augment rotational power of the high speed spool;
a flow modulation device (226) configured to control a combustor bypass air flow (230) around the combustor to the turbine section; and
a controller (256) operable to:
determine a mode of operation of the gas turbine engine;
apply supplemental power to the high speed spool using the motor;
modulate the combustor bypass air flow using the flow modulation device based on determining that the gas turbine engine is in an idle mode of operation and supplemental power is applied to the high speed spool; and
adjust a fuel-air ratio at the combustor based on modulation of the combustor bypass air flow and the supplemental power applied to the high speed spool.

2. The hybrid propulsion system (100) of claim 1, wherein the flow modulation device (226) is configured to receive the combustor bypass air flow (230) from the compressor section (24);
optionally wherein the flow modulation device (226) is configured to receive the combustor bypass air flow (230) from between the low pressure compressor (44) and the high pressure compressor (52).

3. The hybrid propulsion system (100) of claim 1, wherein the flow modulation device (226) is configured to receive the combustor bypass air flow (230) from a bleed location between the compressor section (24) and the combustor (56).

4. The hybrid propulsion system (100) of claim 1, wherein the combustor bypass air flow (230) comprises air compressed by a compression source (232) external to the gas turbine engine (20)

5. The hybrid propulsion system (100) of any preceding claim, wherein the combustor bypass air flow (230) is output to the high pressure turbine (54).

6. The hybrid propulsion system (100) of any preceding claim, further comprising a generator (213A) driven by the low speed spool (30), wherein the generator is configured to provide power to the motor (212B).

7. The hybrid propulsion system (100) of any preceding claim, wherein the controller (256) is configured to determine which available source of energy to draw from to provide supplemental power and power the motor (212B) by one or more of: a generator (213A), an energy storage system (218), and a power source external to the gas turbine engine (20).

8. The hybrid propulsion system (100) of any preceding claim, wherein the controller (256) is further configured to modulate the flow modulation device (226) based on a cross-sectional area or a pressure ratio;
and/or
wherein the controller (256) is further configured to modulate the combustor bypass air flow (230) as an engine cooling flow using the flow modulation device (226) based on determining that the gas turbine engine (20) is in a high engine power mode of operation above the idle mode of operation.

9. A method (600) for controlling a hybrid propulsion system (100), the method comprising:
determining, by a controller (256), a mode of operation of a gas turbine engine (20) comprising a low speed spool (30) and a high speed spool (32);
applying supplemental power to the high speed spool;
modulating, by the controller (256), a combustor bypass air flow (230) around a combustor (56) to a turbine section (28) of the gas turbine engine using a flow modulation device (226) based on determining that the gas turbine engine is in an idle mode of operation and supplemental power is applied to the high speed spool; and
adjusting, by the controller, a fuel-air ratio (410) at the combustor (56) based on modulation of the combustor bypass air flow and the supplemental power applied to the high speed spool.

10. The method of claim 9, wherein the flow modulation device (226) is configured to receive the combustor bypass air flow (230) from a compressor section (24) of the gas turbine engine (20).

11. The method of claim 9, wherein the flow modulation device (226) is configured to receive the combustor bypass air flow (230) from a bleed location between a compressor section (24) and the combustor (56) of the gas turbine engine (20).

12. The method of claim 9, wherein the combustor bypass air flow (230) comprises air compressed by a compression source (232) external to the gas turbine engine (20).

13. The method of any of claims 9 to 12, further comprising:
driving a generator (213A) by the low speed spool (30); and
providing power produced by the generator to a motor (212B);
and/or
determining which available source of energy to draw from to provide supplemental power and powering the motor (212B) by one or more of: the generator (213A), an energy storage system (218), and a power source external to the gas turbine engine (20).

14. The method of any of claims 9 to 13, further comprising:
modulating the flow modulation device (226) based on a cross-sectional area or a pressure ratio;
and/or
modulating the combustor bypass air flow (230) as an engine cooling flow using the flow modulation device (226) based on determining that the gas turbine engine (20) is in a high engine power mode of operation above the idle mode of operation, optionally wherein the flow modulation device (226) is modulated using one or more valves based on a level of compression provided by the gas turbine engine (20) and a cooling threshold.

15. The method of any of claims 9 to 14, further comprising:
reducing a fuel flow to the combustor (56) while modulating the combustor bypass air flow (230) and applying supplemental power to the high speed spool (32) to maintain a fuel-air ratio (410).

## Patentansprüche

1. Hybridantriebssystem (100), umfassend:
ein Gasturbinentriebwerk (20), das eine Niedergeschwindigkeitsspule (30), eine Hochgeschwindigkeitsspule (32) und eine Brennkammer (56) umfasst, wobei die Niedergeschwindigkeitsspule einen Niederdruckverdichter (44) in einem Verdichterabschnitt (24) und eine Niederdruckturbine (46) in einem Turbinenabschnitt (28) umfasst, und die Hochgeschwindigkeitsspule einen Hochdruckverdichter (52) in dem Verdichterabschnitt und eine Hochdruckturbine (54) in dem Turbinenabschnitt umfasst;
einen Motor (212B), der dazu konfiguriert ist, die Drehleistung der Hochgeschwindigkeitsspule zu verstärken;
eine Strömungsmodulationsvorrichtung (226), die dazu konfiguriert ist, einen Brennkammer-Bypass-Luftstrom (230) um die Brennkammer herum zum Turbinenabschnitt zu steuern; und
eine Steuerung (256), die betreibbar ist zum:
Bestimmen eines Betriebsmodus des Gasturbinentriebwerks;
Anwenden einer zusätzlichen Leistung auf die Hochgeschwindigkeitsspule unter Verwendung des Motors;
Modulieren des Brennkammer-Bypass-Luftstroms unter Verwendung der Strömungsmodulationsvorrichtung basierend auf der Bestimmung, dass sich das Gasturbinentriebwerk in einem Leerlaufbetriebsmodus befindet und eine zusätzliche Leistung auf die Hochgeschwindigkeitsspule angewendet wird; und
Anpassen eines Brennstoff-Luft-Verhältnisses an der Brennkammer basierend auf der Modulation des Brennkammer-Bypass-Luftstroms und der auf die Hochgeschwindigkeitsspule angewendeten zusätzlichen Leistung.

2. Hybridantriebssystem (100) nach Anspruch 1, wobei die Strömungsmodulationsvorrichtung (226) dazu konfiguriert ist, den Brennkammer-Bypass-Luftstrom (230) von dem Verdichterabschnitt (24) zu empfangen;
wobei die Strömungsmodulationsvorrichtung (226) optional dazu konfiguriert ist, den Brennkammer-Bypass-Luftstrom (230) von zwischen dem Niederdruckverdichter (44) und dem Hochdruckverdichter (52) zu empfangen.

3. Hybridantriebssystem (100) nach Anspruch 1, wobei die Strömungsmodulationsvorrichtung (226) dazu konfiguriert ist, den Brennkammer-Bypass-Luftstrom (230) von einer Entnahmestelle zwischen dem Verdichterabschnitt (24) und der Brennkammer (56) zu empfangen.

4. Hybridantriebssystem (100) nach Anspruch 1, wobei der Brennkammer-Bypass-Luftstrom (230) Luft umfasst, die durch eine Verdichtungsquelle (232) außerhalb des Gasturbinentriebwerks (20) verdichtet wird.

5. Hybridantriebssystem (100) nach einem der vorhergehenden Ansprüche, wobei der Brennkammer-Bypass-Luftstrom (230) an die Hochdruckturbine (54) ausgegeben wird.

6. Hybridantriebssystem (100) nach einem der vorhergehenden Ansprüche, ferner umfassend einen Generator (213A), der durch die Niedergeschwindigkeitsspule (30) angetrieben wird, wobei der Generator dazu konfiguriert ist, dem Motor (212B) Leistung bereitzustellen.

7. Hybridantriebssystem (100) nach einem der vorhergehenden Ansprüche, wobei die Steuerung (256) dazu konfiguriert ist, zu bestimmen, aus welcher verfügbaren Energiequelle zu ziehen ist, um zusätzliche Leistung bereitzustellen und den Motor (212B) durch einen oder mehrere der Folgenden anzutreiben: einen Generator (213A), ein Energiespeichersystem (218) und eine Leistungsquelle außerhalb des Gasturbinentriebwerks (20).

8. Hybridantriebssystem (100) nach einem der vorhergehenden Ansprüche, wobei die Steuerung (256) ferner dazu konfiguriert ist, die Strömungsmodulationsvorrichtung (226) basierend auf einer Querschnittsfläche oder einem Druckverhältnis zu modulieren;
und/oder
wobei die Steuerung (256) ferner dazu konfiguriert ist, den Brennkammer-Bypass-Luftstrom (230) als einen Triebwerkskühlstrom unter Verwendung der Strömungsmodulationsvorrichtung (226) basierend auf dem Bestimmen, dass sich das Gasturbinentriebwerk (20) in einem Betriebsmodus mit hoher Triebwerksleistung über dem Leerlaufbetriebsmodus befindet, zu modulieren.

9. Verfahren (600) zum Steuern eines Hybridantriebssystems (100), wobei das Verfahren Folgendes umfasst:
Bestimmen, durch eine Steuerung (256), eines Betriebsmodus eines Gasturbinentriebwerks (20), das eine Niedergeschwindigkeitsspule (30) und eine Hochgeschwindigkeitsspule (32) umfasst;
Anwenden einer zusätzlichen Leistung auf die Hochgeschwindigkeitsspule;
Modulieren, durch die Steuerung (256), eines Brennkammer-Bypass-Luftstroms (230) um eine Brennkammer (56) herum zu einem Turbinenabschnitt (28) des Gasturbinentriebwerks unter Verwendung einer Strömungsmodulationsvorrichtung (226) basierend auf dem Bestimmen, dass sich das Gasturbinentriebwerk in einem Leerlaufbetriebsmodus befindet und eine zusätzliche Leistung auf die Hochgeschwindigkeitsspule angewendet wird; und
Anpassen, durch die Steuerung, eines Brennstoff-Luft-Verhältnisses (410) an der Brennkammer (56) basierend auf einer Modulation des Brennkammer-Bypass-Luftstroms und der auf die Hochgeschwindigkeitsspule angewendeten zusätzlichen Leistung.

10. Verfahren nach Anspruch 9, wobei die Strömungsmodulationsvorrichtung (226) dazu konfiguriert ist, den Brennkammer-Bypass-Luftstrom (230) von einem Verdichterabschnitt (24) des Gasturbinentriebwerks (20) zu empfangen.

11. Verfahren nach Anspruch 9, wobei die Strömungsmodulationsvorrichtung (226) dazu konfiguriert ist, den Brennkammer-Bypass-Luftstrom (230) von einer Entnahmestelle zwischen dem Verdichterabschnitt (24) und der Brennkammer (56) des Gasturbinentriebwerks (20) zu empfangen.

12. Verfahren nach Anspruch 9, wobei der Brennkammer-Bypass-Luftstrom (230) Luft umfasst, die durch eine Verdichtungsquelle (232) außerhalb des Gasturbinentriebwerks (20) verdichtet wird.

13. Verfahren nach einem der Ansprüche 9 bis 12, ferner umfassend:
Antreiben eines Generators (213A) durch die Niedergeschwindigkeitsspule (30); und
Bereitstellen von durch den Generator erzeugter Leistung an einen Motor (212B); und/oder
Bestimmen, aus welcher verfügbaren Energiequelle zu ziehen ist, um eine zusätzliche Leistung bereitzustellen und den Motor (212B) durch einen oder mehrere der Folgenden anzutreiben: den Generator (213A), ein Energiespeichersystem (218) und eine Leistungsquelle außerhalb des Gasturbinentriebwerks (20).

14. Verfahren nach einem der Ansprüche 9 bis 13, ferner umfassend:
Modulieren der Strömungsmodulationsvorrichtung (226) basierend auf einer Querschnittsfläche oder einem Druckverhältnis; und/oder
Modulieren des Brennkammer-Bypass-Luftstroms (230) als Triebwerkskühlstrom unter Verwendung der Strömungsmodulationsvorrichtung (226) basierend auf der Bestimmung, dass sich das Gasturbinentriebwerk (20) in einem Betriebsmodus mit hoher Triebwerksleistung über dem Leerlaufbetriebsmodus befindet, wobei die Strömungsmodulationsvorrichtung (226) optional unter Verwendung eines oder mehrerer Ventile basierend auf einem Verdichtungsgrad, der durch das Gasturbinentriebwerk (20) bereitgestellt wird, und einem Kühlschwellenwert moduliert wird.

15. Verfahren nach einem der Ansprüche 9 bis 14, ferner umfassend:
Reduzieren eines Brennstoffstroms zur Brennkammer (56) während des Modulierens des Brennkammer-Bypass-Luftstroms (230) und des Anwendens einer zusätzlichen Leistung auf die Hochgeschwindigkeitsspule (32), um ein Brennstoff-LuftVerhältnis (410) aufrechtzuerhalten.

## Revendications

1. Système de propulsion hybride (100) comprenant :
un moteur à turbine à gaz (20) comprenant un corps à basse vitesse (30), un corps à grande vitesse (32) et une chambre de combustion (56), dans lequel le corps à basse vitesse comprend un compresseur à basse pression (44) dans une section de compresseur (24) et une turbine basse pression (46) dans une section de turbine (28), et le corps à grande vitesse comprend un compresseur haute pression (52) dans la section de compresseur et une turbine haute pression (54) dans la section de turbine ;
un moteur (212B) configuré pour augmenter la puissance de rotation du corps à grande vitesse ;
un dispositif de modulation de flux (226) configuré pour commander un flux d'air de contournement de chambre de combustion (230) autour de la chambre de combustion vers la section de turbine ; et
un dispositif de commande (256) pouvant fonctionner de manière à :
déterminer un mode de fonctionnement du moteur à turbine à gaz ; appliquer une puissance supplémentaire au corps à grande vitesse à l'aide du moteur ;
moduler le flux d'air de contournement de la chambre de combustion à l'aide du dispositif de modulation de flux sur la base de la détermination selon laquelle le moteur à turbine à gaz est dans un mode de fonctionnement au ralenti et qu'une puissance supplémentaire est appliquée au corps à grande vitesse ; et
régler un rapport combustible-air au niveau de la chambre de combustion sur la base de la modulation du flux d'air de contournement de la chambre de combustion et de la puissance supplémentaire appliquée au corps à grande vitesse.

2. Système de propulsion hybride (100) selon la revendication 1, dans lequel le dispositif de modulation de flux (226) est configuré pour recevoir le flux d'air de contournement de la chambre de combustion (230) provenant de la section de compresseur (24) ;
éventuellement dans lequel le dispositif de modulation de flux (226) est configuré pour recevoir le flux d'air de contournement de la chambre de combustion (230) entre le compresseur basse pression (44) et le compresseur haute pression (52).

3. Système de propulsion hybride (100) selon la revendication 1, dans lequel le dispositif de modulation de flux (226) est configuré pour recevoir le flux d'air de contournement de la chambre de combustion (230) provenant d'un emplacement de purge entre de la section de compresseur (24) et la chambre de combustion (56).

4. Système de propulsion hybride (100) selon la revendication 1, dans lequel le flux d'air de contournement de la chambre de combustion (230) comprend de l'air comprimé par une source de compression (232) externe au moteur à turbine à gaz (20).

5. Système de propulsion hybride (100) selon une quelconque revendication précédente, dans lequel le flux d'air de contournement de la chambre de combustion (230) est émis vers la turbine haute pression (54).

6. Système de propulsion hybride (100) selon une quelconque revendication précédente, comprenant en outre un générateur (213A) entraîné par le corps à basse vitesse (30), dans lequel le générateur est configuré pour alimenter le moteur (212B).

7. Système de propulsion hybride (100) selon une quelconque revendication précédente, dans lequel le dispositif de commande (256) est configuré pour déterminer de quelle source d'énergie disponible puiser pour fournir une puissance supplémentaire et alimenter le moteur (212B) par un ou plusieurs parmi : un générateur (213A), un système de stockage d'énergie (218) et une source d'énergie externe au moteur à turbine à gaz (20).

8. Système de propulsion hybride (100) selon une quelconque revendication précédente, dans lequel le dispositif de commande (256) est en outre configuré pour moduler le dispositif de modulation de flux (226) sur la base d'une section transversale ou d'un rapport de pression ;
et/ou
dans lequel le dispositif de commande (256) est en outre configuré pour moduler le flux d'air de contournement de la chambre de combustion (230) en tant que flux de refroidissement du moteur à l'aide du dispositif de modulation de flux (226) sur la base de la détermination selon laquelle le moteur à turbine à gaz (20) est dans un mode de fonctionnement de puissance moteur élevée au-delà du mode de fonctionnement au ralenti.

9. Procédé (600) de commande d'un système de propulsion hybride (100), le procédé comprenant :
la détermination, par un dispositif de commande (256), un mode de fonctionnement d'un moteur à turbine à gaz (20) comprenant un corps à basse vitesse (30) et un corps à grande vitesse (32) ; l'application d'une puissance supplémentaire à la bobine à grande vitesse ;
la modulation, par le dispositif de commande (256), d'un flux d'air de contournement de chambre de combustion (230) autour d'une chambre de combustion (56) vers une section de turbine (28) du moteur à turbine à gaz à l'aide d'un dispositif de modulation de flux (226) sur la base de la détermination selon laquelle le moteur à turbine à gaz est dans un mode de fonctionnement au ralenti et une puissance supplémentaire est appliquée au corps à grande vitesse ; et
le réglage, par le dispositif de commande, d'un rapport combustible-air (410) au niveau de la chambre de combustion (56) sur la base de la modulation du flux d'air de contournement de la chambre de combustion et de la puissance supplémentaire appliquée au corps à grande vitesse.

10. Procédé selon la revendication 9, dans lequel le dispositif de modulation de flux (226) est configuré pour recevoir le flux d'air de contournement de la chambre de combustion (230) provenant d'une section de compresseur (24) du moteur à turbine à gaz (20).

11. Procédé selon la revendication 9, dans lequel le dispositif de modulation de flux (226) est configuré pour recevoir le flux d'air de contournement de la chambre de combustion (230) provenant d'un emplacement de purge entre une section de compresseur (24) et la chambre de combustion (56) du moteur à turbine à gaz (20).

12. Procédé selon la revendication 9, dans lequel le flux d'air de contournement de la chambre de combustion (230) comprend de l'air comprimé par une source de compression (232) externe au moteur à turbine à gaz (20).

13. Procédé selon l'une quelconque des revendications 9 à 12, comprenant en outre :
l'entraînement d'un générateur (213A) par le corps à basse vitesse (30) ; et
la fourniture de l'énergie produite par le générateur à un moteur (212B) ;
et/ou
la détermination de quelle source d'énergie disponible puiser pour fournir une puissance supplémentaire et alimenter le moteur (212B) par un ou plusieurs parmi : le générateur (213A), un système de stockage d'énergie (218) et une source d'énergie externe au moteur à turbine à gaz (20).

14. Procédé selon l'une quelconque des revendications 9 à 13, comprenant en outre :
la modulation du dispositif de modulation de flux (226) sur la base d'une section transversale ou d'un rapport de pression ; et/ou
la modulation du flux d'air de contournement de la chambre de combustion (230) en tant que flux de refroidissement du moteur à l'aide du dispositif de modulation de flux (226) sur la base de la détermination selon laquelle le moteur à turbine à gaz (20) est dans un mode de fonctionnement à puissance moteur élevée au-dessus du mode de fonctionnement au ralenti, éventuellement dans lequel le dispositif de modulation de flux (226) est modulé à l'aide d'une ou plusieurs soupapes sur la base d'un niveau de compression fourni par le moteur à turbine à gaz (20) et d'un seuil de refroidissement.

15. Procédé selon l'une quelconque des revendications 9 à 14, comprenant en outre :
la réduction d'un flux de carburant vers la chambre de combustion (56) tout en modulant le flux d'air de contournement de la chambre de combustion (230) et en appliquant une puissance supplémentaire au corps à grande vitesse (32) pour maintenir un rapport carburant-air (410).
